# EUROPÄISCHE PATENTSCHRIFT

(11) **EP 2 387 873 B1**
(45) Veröffentlichungstag und Bekanntmachung des Hinweises auf die Patenterteilung: **18.05.2016**
(21) Anmeldenummer: 10163191.9
(22) Anmeldetag: 19.05.2010
(51) Int. Cl.: A01F 29/02

(54) **LAND- ODER FORSTWIRTSCHAFTLICHES MESSER AUS MEHRSCHICHTSTAHL**
AGRICULTURAL OR FORESTRY BLADE MADE OF MULTILAYER STEEL
COUTEAU AGRICOLE OU FORESTIER EN ACIER MULTICOUCHE

(43) Veröffentlichungstag der Anmeldung: 23.11.2011
(73) Patentinhaber: Frielinghaus GmbH, 58256 Ennepetal (DE); ThyssenKrupp Steel Europe AG, 47166 Duisburg (DE)
(72) Erfinder: Grob, Martin, 42897 Remscheid (DE); Stein, Joachim, 58285 Gevelsberg (DE); Wunderlich, Roland, 59192 Bergkamen (DE); Tamler, Horst Walter, 58453 Witten (DE); Becker, Jens-Ulrik, 47058 Duisburg (DE); Mempel, Rüdiger, 44269 Dortmund (DE)
(74) Vertreter: Rehberg, Bernhard Frank

(56) Entgegenhaltungen:
- EP-A1- 0 663 144
- EP-A1- 1 057 397
- DE-A1-102004 059 612
- DE-U1-202006 017 540
- GB-A- 2 150 151
- US-A- 3 911 652

## Beschreibung

### TECHNISCHES GEBIET DER ERFINDUNG

Die Erfindung betrifft ein land- oder forstwirtschaftliches Messer mit einer Schneide und einer Aufnahmeöffnung zum Befestigen des Messers an einem Schneidwerk.

Bei dem Messer handelt es sich also um ein Spezialmesser, welches in einem Schneidwerk zum Schneiden bzw. Zerkleinern von Gras, Stroh, Getreide, Ästen und anderen Pflanzen und Pflanzenteilen Einsatz findet. Insbesondere kann das Messer über eine Aufnahmeöffnung an einer Aufnahme eines Antriebs aufgehängt sein.

### STAND DER TECHNIK

Aus der unter der Veröffentlichungsnummer DE 600 05 128 T2 veröffentlichten deutschen Übersetzung der europäischen Patentschrift ist ein Mehrschichtverbundstahl mit einer Mehrzahl von Stahlschichten bekannt. Das Verbundmaterial soll einen homogenen Aufbau aufweisen. Hierfür stimmen die Stahlschichten hinsichtlich ihrer Eigenschaften überein. Ein offenbartes Anwendungsbeispiel des Mehrschichtverbundstahls ist ein Klingenstahl, der feines Carbid enthält, das über die gesamte Klinge verteilt ist.

Aus der deutschen Patentschrift DE 10 2005 006 606 B3 ist ein Mehrschichtverbundstahl mit einer Mehrzahl von Schichten bekannt. Die abwechselnd übereinander angeordneten Schichten weisen unterschiedliche Eigenschaften auf. Als Anwendungebeispiel werden Legerhülsen und Motorenkomponenten, wie Ventiltassen, genannt.

Aus der europäischen Patentanmeldung EP 2 060 532 A1 ist ein Mehrschichtverbundstahl mit einer Mehrzahl von Schichten bekennt. Die Schichten weisen unterschiedliche Eigenschaften auf. Als Anwendungsbeisplele werden Teile von Kraftfahrzeugen genannt

Aus der deutschen Patentanmeldung DE 10 2004 069 612 A1 ist ein land- oder forstwirtschaftliches Messer mit einem Grundkörper mit zwei Hauptflächen und mehreren Seitenflächen bekannt, wobei der Grundkörper im Bereich einer Seitenfläche eine Schneide aufweist.

Ein Messer für Maschinen für die pharmazeutische Industrie oder zum Schneiden von Lebensmitteln Ist aus der britischen Patentanmeldung GB 2 150 151 A bekannt. Dieses Messer kann mehrere Stahlschichten unterschiedlicher Härte besitzen, wobei die härte innere Stahlschicht eine Dicke besitzt, die mehr als doppelt so groß wie die der beiden weicheren äußeren Stahlschichten Ist (explizit: härtere Innere Stahlschicht: 3, 5 mm; weichere äußere Stahlschichten: 1,25 mm).

### AUFGABE DER ERFINDUNG

Der Erfindung liegt die Aufgabe zugrunde, ein land- oder forstwirtschaftliches Messer bereitzustellen, welches eine signifikant erhöhte Standzeit besitzt.

### LÖSUNG

Die Aufgabe der Erfindung wird erfingdungsgemäß mit den Merkmalen das unabhängigen Patentanspruchs 1 gelöst.

### BESCHREIBUNG DER ERFINDUNG

Ein land- oder forstwirtschaftliches Messer, insbesondere Schneidmesser für Kreiseimäher, Rotormesser, Futtermischwegenmeseer, Strohhäcksiermesser oder Unterflurhäcksiermesser, weist einen Grundkörper unit zwei Hauptflächen und mehreren Seitenflächen auf, wobei der Grundkörper im Bereich einer Seitenfläche eine Schneide aufweist. Der Grundkörper weist eine Mehrzahl von sich parallel zu den Hauptflächen erstreckenden Stahlschichten unterschiedlicher Harte auf. Eine der härteren Stahlschichten besitzt eine Dicke, die mindestens etwa 30 % größer als die Dicke einer der weniger harten Stahlschichten ist.

Durch die besondere Kombination unterschiedlich harter Stahischichten mit vergleichsweise dicker gestalteten härteren Stahlschichten wird die Zähigkeit des Messers, seine Verformbarkeit sowie das Verschleißverhalten an der Schneide gegenüber den im Stand der Technik bekannten land- oder forstwirtschaftlichen Messern entscheidend verbessert.

Hintergrund der Erfindung ist, dass die Maschinen in der Land-, Forst- und Holzwirtschaft immer größer werden und dementsprechend immer größere Flächen und Volumina in Kürzerer Zeit bearbeiten. Daher ist die Standzeit der eingesetzten Verschleißteile, nämlich insbesondere der Messer, von wachsender Bedeutung. Die Wechsel- und Instandhaltungszeiten der Maschinen müssen verständlicherweise so gering wie möglich gehalten werden, um die teuren Maschinen wirtschaftlich einsetzen zu können.

Die Erfindung betrifft insbesondere oberirdisch schneidende Messer für die Forst- und Landwirtschaft, wobei zwei wesentliche unterschiedliche Schneidengestaltungen existieren, nämlich halbdachförmige Schneiden und dachförmige Schneiden. Ein besonderes Beanspruchungsprofil ergibt sich bei derartigen land- oder forstwirtschaftlichen Messern daraus, dass die Messer zwar grundsätzlich beispielsweise zum Schneiden von vergleichsweise weichem Gras dienen, beim Schnittvorgang jedoch auch auf relativ harte Teile, wie beispielsweise Steine, Wurzeln und dergleichen, treffen können. Wenn also das Material des Messers hart und spröde ist, besteht bei einem solchen Einsatz die Gefahr des Bruchs des Messers mit der darauf folgenden Notwendigkeit des Austauschs.

Strohhäckslermesser besitzen in der Regel eine Gesamtdicke von zwischen etwa 3 mm und 5 mm und können sowohl komplett vergütet als auch lediglich im Schneiden- und Lochbereich randzonenvergütet ausgeführt sein. Sie können ein, zwei, drei oder mehr Schneiden besitzen, die ggf. mit einer Verzahnung versehen sind. In der Regel sind die Schneiden dachförmig ausgebildet.

Die unterschiedlichen Schichten gleicher Härte können gleiche Dicken oder unterschiedliche Dicken aufweisen. Der gesamte Schichtaufbau kann symmetrisch oder asymmetrisch ausgebildet sein.

Vorzugsweise sind die härteren und die weniger harten Stahlschichten abwechselnd übereinander angeordnet. Hierdurch werden die miteinander konkurrierenden Eigenschaften der einerseits zu erreichenden Härte und der andererseits zu gewährleistenden Elastizität und Biegefestigkeit über den gesamten Querschnitt und somit für das gesamte Messer gewährleistet.

Vorzugsweise weist der Grundkörper mindestens sechs Stahlschichten auf. Die Anzahl der Stahlschichten kann jedoch auch deutlich größer gewählt werden und beispielsweise bis zu 60 Schichten betragen. Bei einer Gesamtdicke des Messers von zwischen etwa 3 mm und 5 mm liegt die Anzahl von Schichten insbesondere zwischen 6 und 60. Die Dicke der Schichten kann unterschiedlich gewählt werden und hängt von der gewünschten Zähigkeit und der Schneidengeometrie des Messers ab. Die bevorzugte Mindeststärke einer Schicht beträgt etwa 0,06 mm und die Maximaldicke beträgt etwa 2 mm. Bevorzugt sind Dicken von Stahlschichten zwischen etwa 0,08 mm und 1,0 mm.

Ein besonderer Vorteil des neuen Schichtaufbaus des land- oder forstwirtschaftlichen Messers kommt im Betrieb des Messers zum Tragen. Bei derartigen Messern - und insbesondere bei Schneidmessern für Kreiselmäher (auch als "Rotorklingen" bezeichnet) - ist die Verrundung der Schneide im Lauf der Betriebsdauer ein wesentliches Problem: Eine Verrundung der Schneide führt dazu, dass diese das Schnittgut nicht mehr sauber schneidet, sondern durch die verschleißbedingte Verrundung das Schnittgut nur noch ab- oder sogar umschlägt, wodurch das Schnittgut zum Teil stehen bleibt. Je geringer die Verrundung an der Schneide ist, desto länger behält das Messer bzw. seine Schneide die funktionsgemäße Schärfe. Durch den Einsatz der mehreren Schichten unterschiedlicher Härte bildet sich im Laufe des Einsatzes des Messers eine Art Wellenprofil an der Schneide aus. Dabei wäscht der einsetzende Verschleiß zunächst die weicheren Schichten aus, während die härteren Schichten einen geringeren Verschleiß besitzen, so dass insgesamt das Wellenprofil entsteht und die Schneide eine weniger starke Verrundung besitzt. Dieses Wellenprofil wirkt sich günstig beim Schneiden von Schnittgut aus, da es quasi im Sinne eines Sägezahnpröfils wirkt und somit das zu schneidende pflanzliche Schnittgut auch noch nach längerer Einsatzzeit des Messers zuverlässig ab- bzw. zerschneidet.

Der Grundkörper kann Stahlschichten mit mehr als zwei unterschiedlichen Härten aufweisen. Hierdurch lassen sich in definierter Weise gewünschte Eigenschaften des Messers realisieren. So kann beispielsweise eine sehr harte zentrale Stahlschicht mit weniger harten Deckschichten kombiniert werden, wobei die Deckschichten dann wiederum abwechselnd aus härteren und weicheren Stahlschichten bestehen. Ein konkretes Beispiel ist die Verwendung eines Stahls 100 Cr 6 in der zentralen Stahlschicht und die abwechselnde Verwendung von Deckschichten aus C 80 und BSA-Stahl. Eine weitere Möglichkeit ist die Verwendung einer oder mehrerer harten zentralen Stahlschicht aus 100 Cr 6 mit der darauf folgenden Anordnung einer schmalen Pufferschicht aus BSE-Stahl und einer weicheren Schicht aus 58CrV4.

Diese Ausbildung bietet sich insbesondere dann an, wenn die Schneide dachförmig ausgebildet ist. Die zentrale Stahlschicht kann insbesondere eine Härte von etwa zwischen 620 HV und 800 HV aufweisen. Die zentrale Stahlschicht kann insbesondere die folgenden Bestandteile aufweisen: C 0,96 % - 1,04 %, Si 0,15 % - 0,35 %, Mn 0,25 % - 0,4 %, P max. 0,02 %, S max. 0,003 %, Alg max. 0,02 %, Cr, 1,45 % - 1,6 %, N max. 0,01 %, Cu max. 0,15 %, Mo max. 0,05 %, Ni max. 0,15 %, Nb max. 0,05 %, Ti max. 0,003 %, V max. 0,05 %, Sn max. 0,01 %, O max. 0,002 %.

Die zentrale Stahlschicht kann insbesondere eine Dicke besitzen, die etwa zwischen 15 % und 35 % der Dicke des Grundkörpers beträgt. Diese zentrale Stahlschicht stellt somit einen wesentlichen Teil der Festigkeit des Messers bereit.

Die härteren Stahlschichten weisen insbesondere eine Härte von zwischen 580 HV und 800 HV und die weniger harten Stahlschichten eine Härte von maximal 560 HV auf. Es hat sich herausgestellt, dass die Kombination dieser Härtebereiche die gewünschten Eigenschaften des Messers im Sinne einer hohen Verschleißresistenz bei gleichzeitig ausreichend großer Elastizität besonders vorteilhaft bewirkt. Gleiches gilt für die bevorzugten Kohlenstoffgehalte von etwa 0,3 % bis 1,2 % für die härteren Stahlschichten sowie von maximal 0,1 % für die weniger harten Stahlschichten.

Besonders bevorzugte konkrete Stahlschichten weisen die folgenden Bestandteile auf: Si 0,15 % - 0,40 %, Mn 0,25 % - 0,75 %, P max. 0,02 %, S max. 0,008 %, Alg max. 0,02 %, Cr 0,19 % - 1,60 %, N max. 0,01 %, Cu max. 0,15 %, Mo max. 0,05 %, Ni max. 0,15 %, Nb max. 0,05 %, Ti max. 0,008 %, V max. 0,05 %, B max. 0,0005 %, As max. 0,01 %, Sn max. 0,03 %, H max. 3,5 %, Co max. 0,01 %, Ca max. 0,005 %, O max. 0,002 %.

Weniger harte Stahlschichten weisen die folgenden Bestandteile auf: Si max. 0,06 %, Mn max. 0,6 %, P max. 0,02 %, S max. 0,015 %, Alg max. 0,06%, Cr max. 0,12 %, N max. 0,009 %, Cu max. 0,12 %, Mo max. 0,05 %, Ni max. 0,12 %, Nb max. 0,005 %, Ti max. 0,005 %, V max. 0,01 %, B max. 0,006 %, As max. 0,01 %, Sn max. 0,04 %, Co max. 0,01 %, Ca max. 0,005 %.

Der Grundkörper ist zumindest im Bereich seiner Schneide vergütet. Der Grundkörper kann entweder vollständig vergütet, nur im Bereich seiner Schneide vergütet oder sowohl im Bereich seiner Schneide als auch im Bereich seiner Aufnahmeöffnung bzw. Aufnahmeöffnungen vergütet sein. Durch die Vergütung werden die gewünschten Festigkeits- und Duktilitätswerte des Messers erreicht.

Aufgrund der verschiedenen Anforderungen und Einsatzgebiete ergibt sich in Abhängigkeit von der Schneidengeometrie eine unterschiedliche Wahl von Schichtaufbauten, Rohstoffkomponenten und Wärmebehandlungen.

Derartige Werte sind der folgenden Tabelle zu entnehmen:

| **Messer** | **Schneidengeometrie** | **Materialstärke [mm]** | **Rotation [U/min]** | **Härte [HRC]** | **Schlagbelastung** | **Biegebelastung** | **Verschleiß reibend** |
|---|---|---|---|---|---|---|---|
| Schneidmesser für Kreiselmäher | halbdachförmig | 3-5 | 2.000 - 3.000 | < 45 | sehr hoch | sehr hoch | sehr hoch |
| Futtermischwagenmesser horizontal | halbdachförmig dachförmig | 4-12 | 12 - 20 | 45 - 58 | gering | hoch | sehr hoch |
| Futtermischwagenmesser vertikal | halbdachförmig | 5-12 | 5-40 | 45 - 58 | sehr gering | hoch | sehr hoch |
| Rotormesser Maispflücker | halbdachförmig | 5-7 | 900-1.500 | 40-55 | gering | keine | gering |
| Strohhäckslermesser | halbdachförmig dachförmig | 3-5 | 2.000-3.000 | 40-60 | sehr gering | sehr gering | sehr hoch |
| Unterflurhäckslermesser | halbdachförmig dachförmig | 4-6 | 2.500-3.500 | 40-60 | sehr hoch | hoch | sehr hoch |

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass mindestens die dort genannte Anzahl vorhanden ist, ohne dass es einer expliziten Verwendung des Adverbs "mindestens" bedarf. Wenn also beispielsweise von einer Schneide die Rede ist, ist dies so zu verstehen, dass mindestens eine Schneide vorhanden ist. Wenn z. B. zwei Schichten genannt werden, ist dies so zu verstehen, dass mindestens zwei Schichten vorhanden sind. Wenn hingegen die genaue Anzahl eines Merkmals angegeben werden soll, findet das Adjektiv "genau" vor dem jeweiligen Merkmal Verwendung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Vorderansicht einer ersten beispielhaften Ausführungsform eines als Schneidmesser für Kreiselmäher ausgebildeten Messers.
- **Fig. 2**: zeigt eine Draufsicht auf das Messer gemäß Fig. 1.
- **Fig. 3**: zeigt eine Vorderansicht einer zweiten beispielhaften Ausführungsform eines als verdrehtes Schneidmesser für Kreiselmäher ausgebildeten Messers.
- **Fig. 4**: zeigt eine Draufsicht auf das Messer gemäß Fig. 3.
- **Fig. 5**: zeigt eine Vorderansicht einer dritten beispielhaften Ausführungsform eines als Rotormesser ausgebildeten Messers.
- **Fig. 6**: zeigt eine Draufsicht auf das Messer gemäß Fig. 5.
- **Fig. 7**: zeigt eine Vorderansicht einer vierten beispielhaften Ausführungsform eines als Strohhäckslermesser ausgebildeten Messers.
- **Fig. 8**: zeigt eine Draufsicht auf das Messer gemäß Fig. 7.
- **Fig.°9**: zeigt eine Vorderansicht einer fünften beispielhaften Ausführungsform eines als Unterflurhäckslermesser ausgebildeten Messers.
- **Fig. 10**: zeigt eine Draufsicht auf das Messer gemäß Fig. 9.
- **Fig. 11**: zeigt eine Vorderansicht einer sechsten beispielhaften Ausführungsform eines als Futtermischwagenmesser ausgebildeten Messers.
- **Fig. 12**: zeigt eine Ansicht einer halbdachförmigen Schneide.
- **Fig. 13**: zeigt eine Ansicht einer dachförmigen Schneide.
- **Fig. 14**: zeigt eine Schnittansicht eines ersten beispielhaften Schichtaufbaus eines Messers mit halbdachförmiger Schneide.
- **Fig. 15**: zeigt das Messer gemäß Fig. 14 in seinem verschleißbehafteten Zustand.
- **Fig. 16**: zeigt eine Schnittansicht eines zweiten beispielhaften Schichtaufbaus eines Messers mit halbdachförmiger Schneide.
- **Fig. 17**: zeigt eine Schnittansicht einer dritten beispielhaften Ausführungsform eines Schichtaufbaus eines Messers mit dachförmiger Schneide.
- **Fig. 18**: zeigt eine vierte beispielhafte Ausführungsform eines Schichtaufbaus eines Messers mit dachförmiger Schneide.
- **Fig. 19**: zeigt eine fünfte beispielhafte Ausführungsform eines Schichtaufbaus eines Messers mit dachförmiger Schneide in seinem verschleißbehafteten Zustand.

### FIGURENBESCHREIBUNG

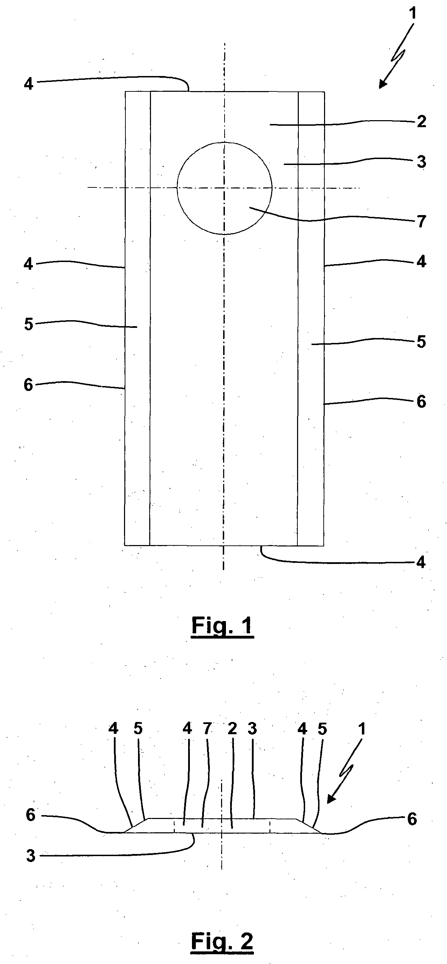

Die **Fig. 1 und 2** zeigen Ansichten einer ersten beispielhaften Ausführungsform eines neuen land- oder forstwirtschaftlichen Messers 1. Im vorliegenden Beispiel ist das Messer 1 als Rotormesser ausgebildet. Das Messer 1 weist einen Grundkörper 2 mit zwei Hauptflächen 3 und mehreren Seitenflächen 4 auf. Der Grundkörper 2 weist im vorliegenden Fall zwei Schneiden 5 auf, die jeweils im Bereich einer der Seitenflächen 4 angeordnet sind. Die Schneiden 5 weisen jeweils eine Schneidkante 6 auf.

Das Messer 1 weist weiterhin eine Aufnahmeöffnung 7 auf, die zur Befestigung an einer Aufnahme eines Antriebs (nicht dargestellt) dient. In dieser Weise wird das Messer 1 an einem Schneidwerk zum Schneiden bzw. Verkleinern von Gras, Stroh, Getreide, Ästen oder anderen Pflanzen und Pflanzenteilen verwendet. Dieser grundsätzliche Aufbau des Messers 1 ist an sich bekannt und bedarf daher keiner weiteren detaillierten Beschreibung.

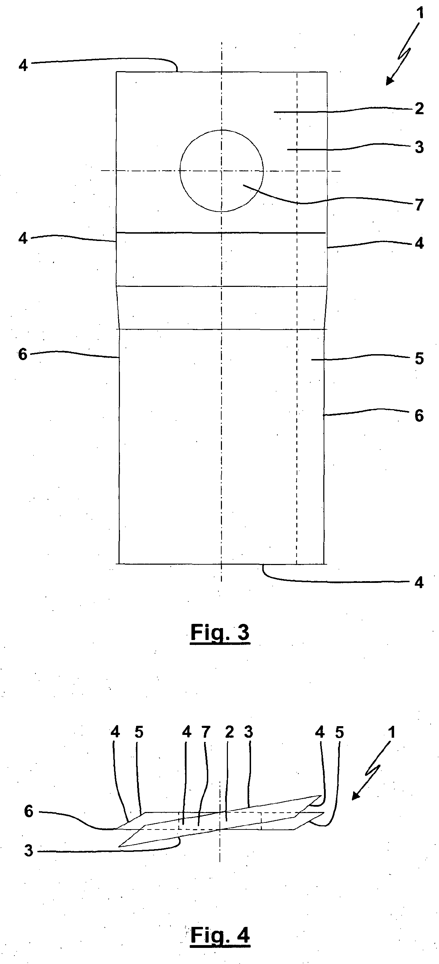

Die **Fig. 3 und 4** zeigen entsprechende Ansichten einer zweiten beispielhaften Ausführungsform des Messers 1, welches in diesem Fall als verdrehtes Rotormesser ausgebildet ist. Dementsprechend ist in der Fig. 3 auch nur eine der Schneiden 6 sichtbar.

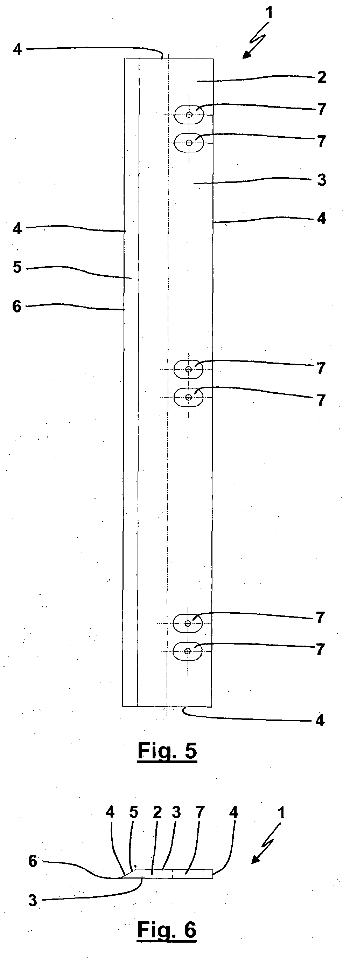

Die **Fig. 5 und 6** zeigen wiederum vergleichbare Ansichten einer dritten beispielhaften Ausführungsform des Messers 1, welches in diesem Fall ebenfalls als Rotormesser ausgebildet ist, das jedoch lediglich eine Schneide 6 aufweist. In diesem Fall weist das Messer 1 eine Mehrzahl von Aufnahmeöffnungen 7 auf.

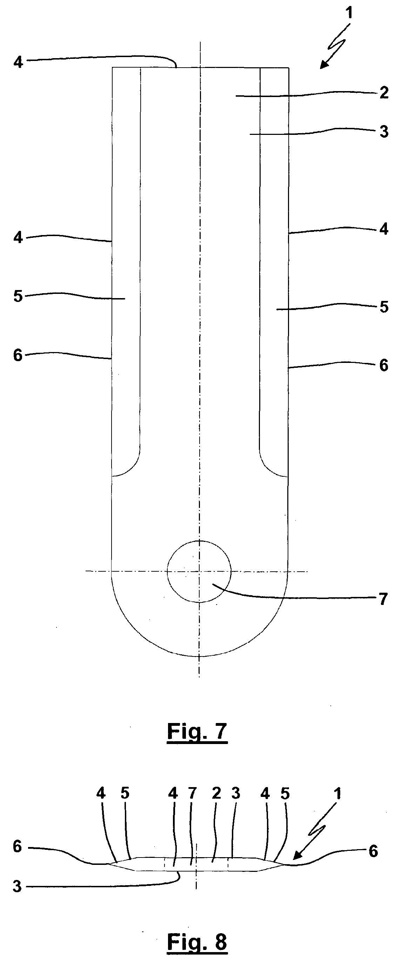

Die **Fig. 7 und 8** zeigen eine vierte beispielhafte Ausführungsform des neuen Messers 1, wobei es sich hier um ein Strohhäckslermesser handelt. Bezüglich der weiteren Merkmale wird auf die oberhalb angegebenen Ausführungen verwiesen.

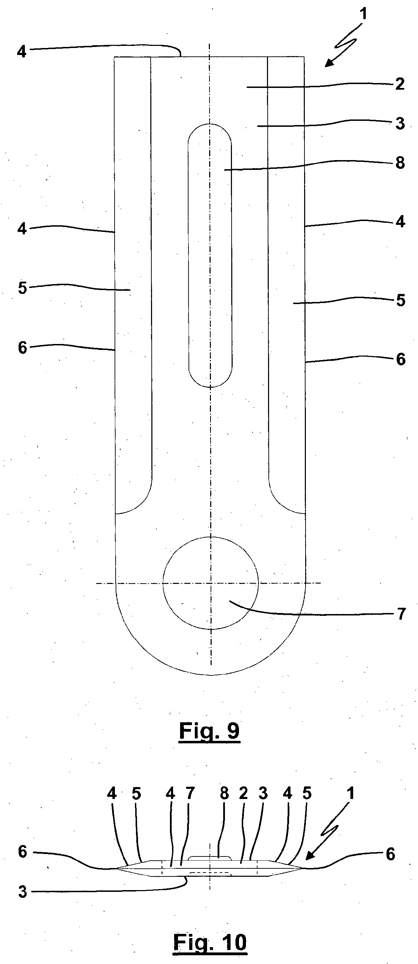

Die **Fig. 9 und 10** zeigen eine fünfte beispielhafte Ausführungsform des neuen Messers 1, wobei es sich hier um ein Unterflurhäckslermesser handelt. Das Messer 1 besitzt in diesem Fall eine Sicke 8. Bezüglich der weiteren Merkmale wird auf die oberhalb angegebenen Ausführungen verwiesen.

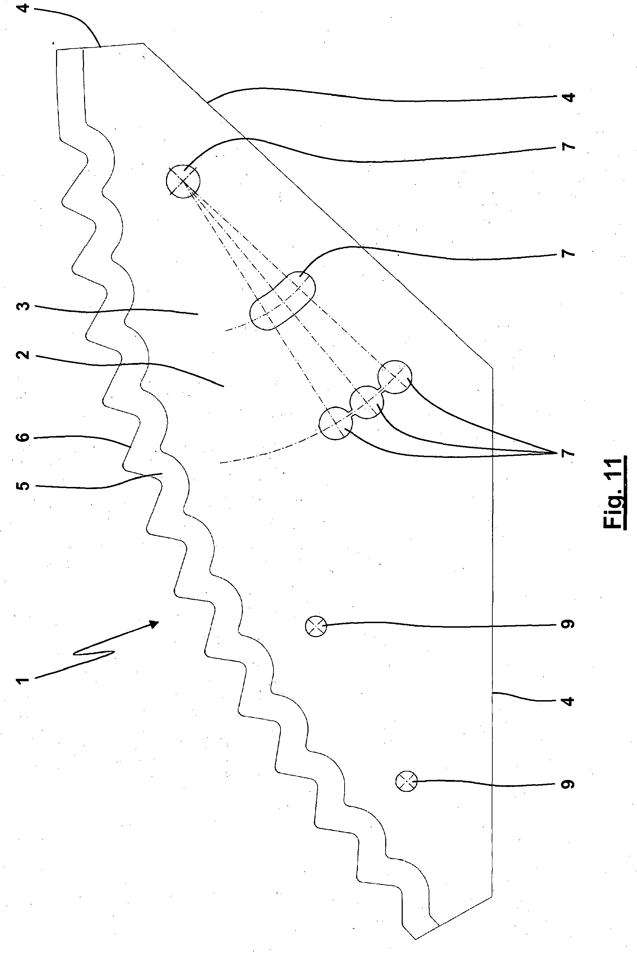

**Fig. 11** zeigt eine Vorderansicht einer weiteren beispielhaften Ausführungsform des neuen Messers 1, welches in diesem Fall als Futtermischwagenmesser ausgebildet ist. In diesem Fall weist die Schneide 5 ein Sägezahnprofil auf. Neben den Aufnahmeöffnungen 7 sind noch Bohrungen 9 vorhanden, die ebenfalls zum Befestigen dienen.

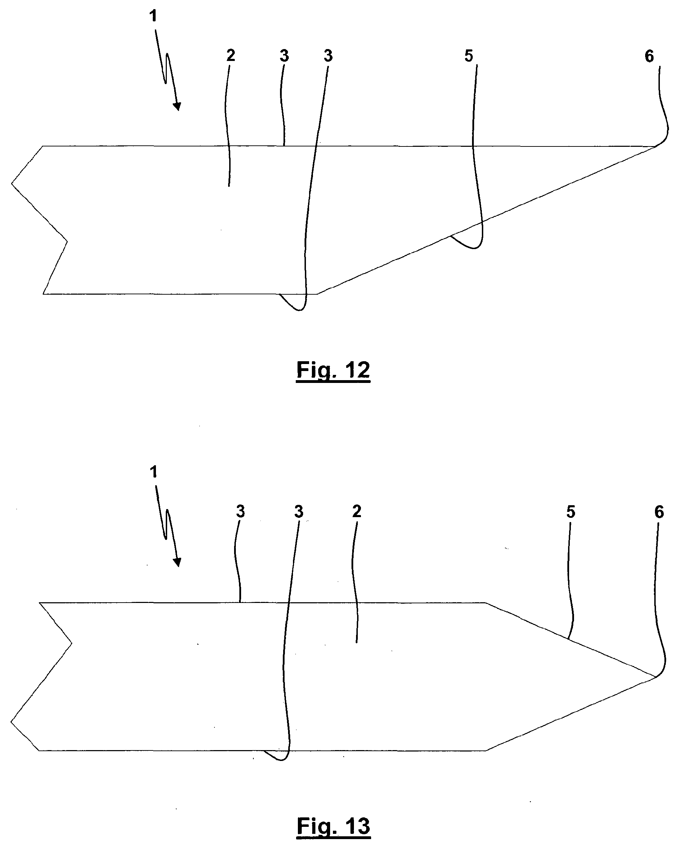

**Fig. 12** zeigt den grundsätzlichen Aufbau einer halbdachförmigen Schneide 5, während **Fig. 13** diesen für eine dachförmige Schneide 5 zeigt.

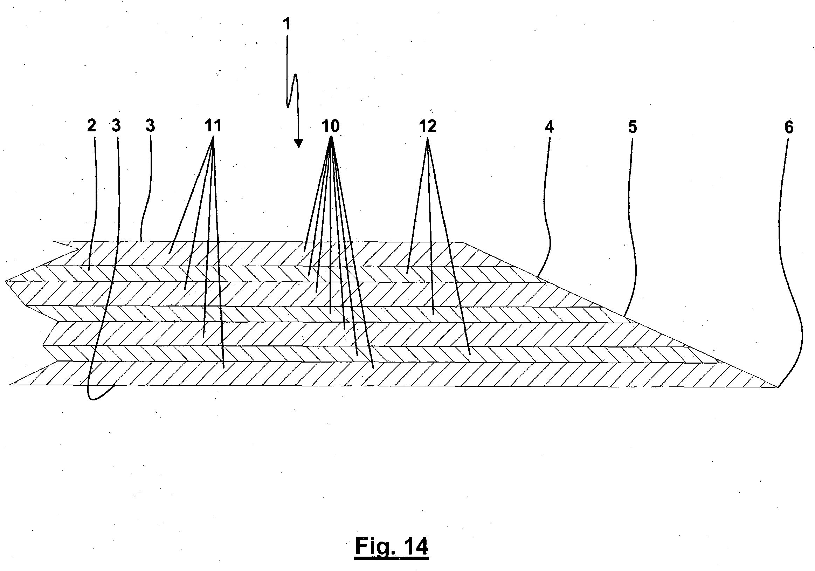

**Fig. 14** zeigt nun eine erste beispielhafte Ausführungsform des neuen Schichtaufbaus des Messers 1. Der Grundkörper 2 weist eine Mehrzahl von sich parallel zu den Hauptflächen 3 erstreckenden Stahlschichten 10 auf. Im vorliegenden Beispiel sind sieben Stahlschichten 10 vorhanden. Es können jedoch auch mehr oder weniger Stahlschichten 10 vorgesehen sein.

Die Stahlschichten 10 weisen unterschiedliche Härten auf. Mindestens eine der härteren Stahlschichten 11 besitzt eine Dicke, die mindestens etwa 30 % größer als die Dicke einer der weniger harten Stahlschichten 12 ist. Im vorliegenden Beispiel sind die härteren Stahlschichten 11 doppelt so dick wie die weniger harten Stahlschichten 12.

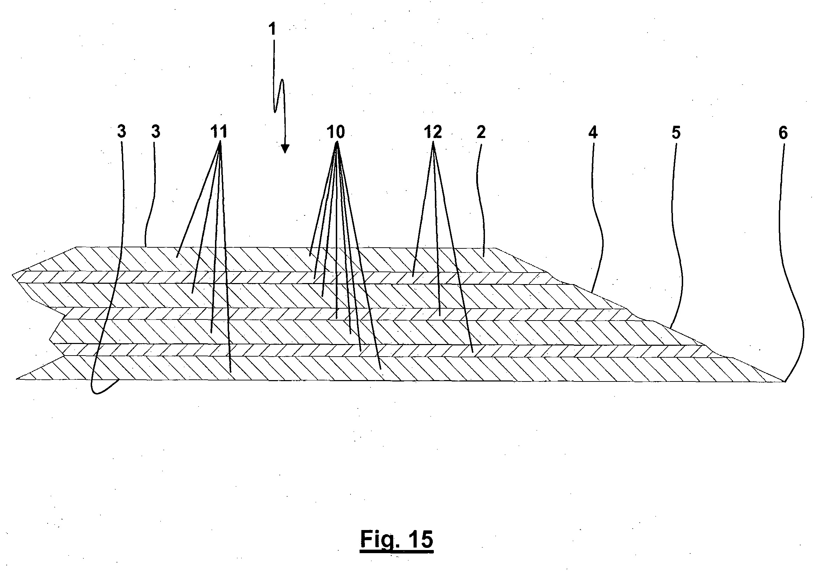

**Fig. 15** zeigt das Messer 1 gemäß Fig. 14 nach einer gewissen Gebrauchsdauer, so dass bereits Verschleiß eingetreten ist. Wie gut erkennbar dargestellt ist, tritt der Verschleiß dabei zunächst verstärkt an den weniger harten Stahlschichten 12 auf, so dass diese stärker auswaschen als die härteren Stahlschichten 11. Hierdurch ergibt sich im Vergleich zum Stand der Technik eine geringere Verrundung der Schneide 5, so dass das Messer 1 quasi im Sinne eines Sägezahnprofils wirkt und somit das zu schneidende pflanzliche Schnittgut auch noch nach längerer Einsatzzeit des Messers 1 zuverlässig ab- bzw. zerschneidet.

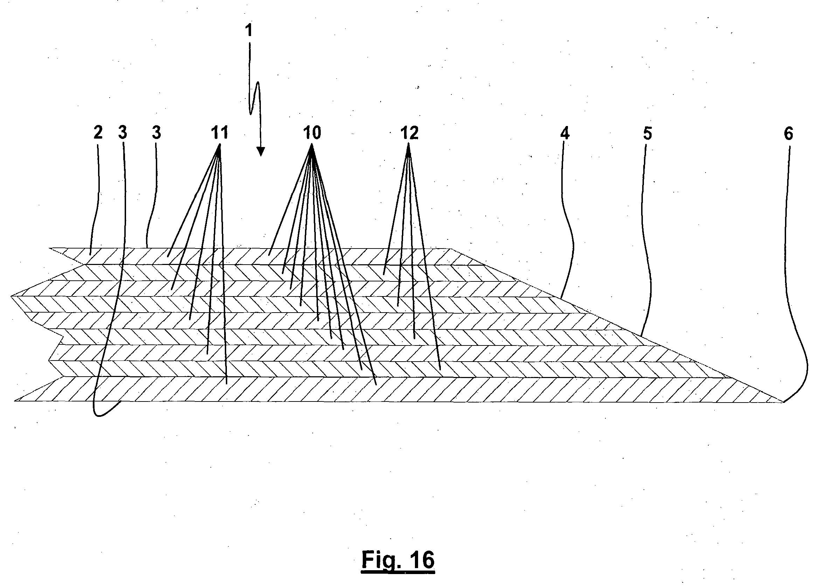

**Fig. 16** zeigt eine weitere Ausführungsform eines möglichen Schichtaufbaus des neuen Messers 1. Das Messer 1 weist dabei wiederum abwechselnd härtere Stahlschichten 11 und weniger harte Stahlschichten 12 auf, wobei im vorliegenden Fall lediglich die unterste härtere Stahlschicht 11 dicker als die weniger harten Stahlschichten 11 ausgebildet ist. Die sonstigen härteren Stahlschichten 11 besitzen die gleiche Dicke wie die weniger harten Stahlschichten 12. Im vorliegenden Fall sind insgesamt neun Stahlschichten 10 vorhanden.

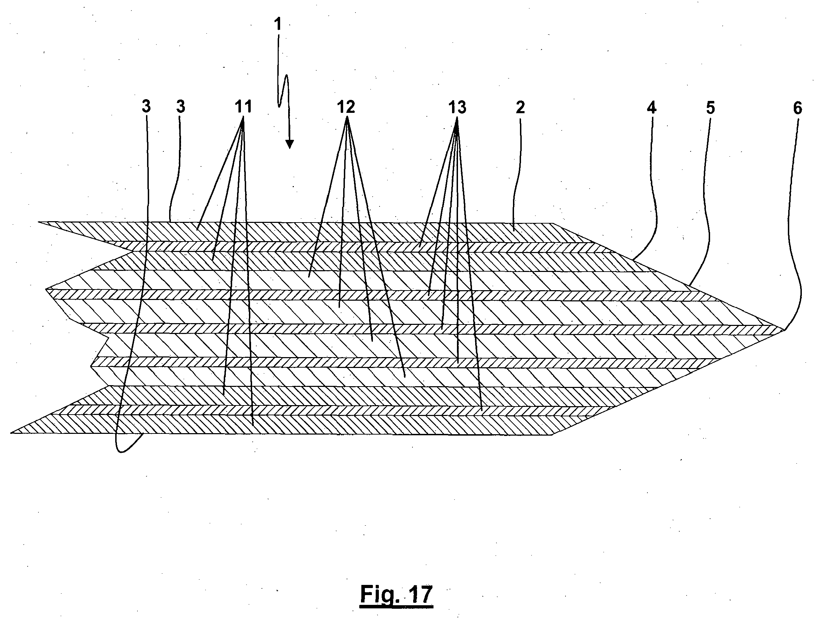

**Fig. 17** zeigt nun eine weitere Möglichkeit eines neuen Schichtaufbaus an einem Messer 1 mit einer dachförmigen Schneide 5. In diesem Fall weist das Messer 1 neben den härteren Stahlschichten 11 und den weniger harten Stahlschichten 12 noch weiche Stahlschichten 13 auf. Die härteren Stahlschichten 11 weisen dabei insbesondere eine Härte von 580-800 HV, die weniger harten Stahlschichten 12 von maximal 560 HV und die weichen Stahlschichten 13 von maximal 200 HV auf. Die weichen Stahlschichten 13 betten dabei die anderen Stahlschichten 11, 12 ein und stellen somit die Zähigkeit des Messers 1 bereit.

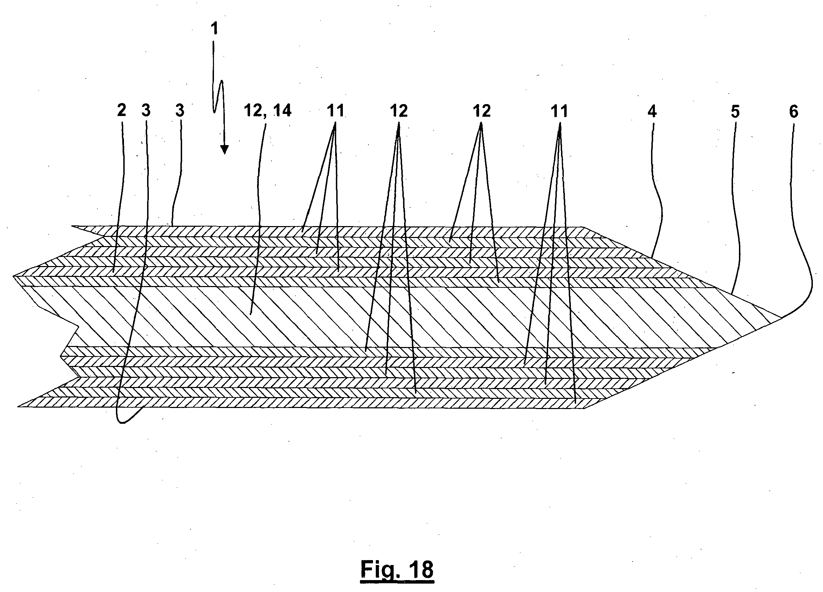

**Fig. 18** zeigt einen weiteren beispielhaften Schichtaufbau des Messers 1. In diesem Fall weist das Messer 1 eine besonders harte zentrale Stahlschicht 14 auf. Diese weist insbesondere eine Härte von etwa 620-800 HV auf. Diese zentrale Stahlschicht 14 ist besonders dick gestaltet und kann insbesondere zwischen 15 % und 35 % der Dicke des Grundkörpers 2 ausmachen. In dem in Fig. 18 dargestellten Beispiel beträgt dieser Anteil etwa 35 %. Bei den weiteren Stahlschichten 10 handelt es sich wiederum um härtere Stahlschichten 11 und weniger harte Stahlschichten 12.

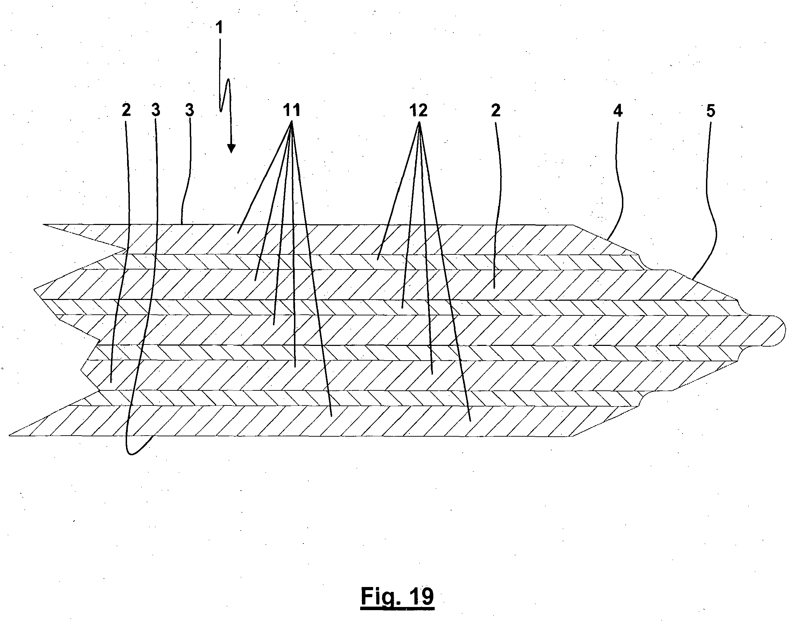

**Fig. 19** zeigt schließlich einen Zustand des Messers 1 nach einer gewissen Betriebsdauer. Es ist wiederum erkennbar, dass der Verschleiß zunächst an den weniger harten Stahlschichten 12 auftritt, während die härteren Stahlschichten 11 weniger verschleißen.

Sämtliche zuvor beschriebenen Schichtaufbauten können mit sämtlichen zuvor beschriebenen Messerbauformen kombiniert werden.

### BEZUGSZEICHENLISTE

- 1: Messer
- 2: Grundkörper
- 3: Hauptfläche
- 4: Seitenflächen
- 5: Schneide
- 6: Schneidkante
- 7: Aufnahmeöffnung
- 8: Sicke
- 9: Bohrung
- 10: Stahlschicht
- 11: härtere Stahlschicht
- 12: weniger harte Stahlschicht
- 13: weiche Stahlschicht
- 14: harte zentrale Stahlschicht

## Patentansprüche

1. Land- oder forstwirtschaftliches Messer (1), insbesondere Schneidmesser für Kreiselmäher, Rotormesser, Futtermischwagenmesser, Strohhäckslermesser oder Unterflurhäckslermesser, mit
einem Grundkörper (2) mit zwei Hauptflächen (3) und mehreren Seitenflächen (4), wobei der Grundkörper (2) im Bereich einer Seitenfläche (4) eine Schneide (5) aufweist,
**dadurch gekennzeichnet, dass** der Grundkörper (2) eine Mehrzahl von sich parallel zu den Hauptflächen (3) erstreckenden Stahlschichten (10, 11, 12, 13, 14) unterschiedlicher Härte aufweist,
wobei eine der härteren Stahlschichten (11, 14) eine Dicke besitzt, die mindestens etwa 30 % größer als die Dicke einer der weniger harten Stahlschichten (12, 13) ist.

2. Messer (1) nach Anspruch 1, **dadurch gekennzeichnet, dass** die härteren und die weniger harten Stahlschichten (11, 12, 13, 14) abwechselnd übereinander angeordnet sind.

3. Messer (1) nach Anspruch 1 oder 2, **dadurch gekennzeichnet, dass** die zwei Hauptflächen (3) jeweils durch eine härtere Stahlschicht (11, 14) gebildet werden.

4. Messer (1) nach mindestens einem der vorhergehenden Ansprüche, **dadurch gekennzeichnet, dass** der Grundkörper (2) mindestens sechs Stahlschichten (10, 11, 12, 13, 14) aufweist.

5. Messer (1) nach mindestens einem der vorhergehenden Ansprüche, **dadurch gekennzeichnet, dass** die Stahlschichten (10, 11, 12, 13, 14) eine Dicke von zwischen etwa 0,08 mm und 1,0 mm aufweisen.

6. Messer (1) nach mindestens einem der vorhergehenden Ansprüche, **dadurch gekennzeichnet, dass** der Grundkörper (2) Stahlschichten (10, 11, 12, 13, 14) mit mehr als zwei unterschiedlichen Härten aufweist.

7. Messer (1) nach mindestens einem der vorhergehenden Ansprüche, **dadurch gekennzeichnet, dass** die härteren Stahlschichten (11, 14) eine Härte von etwa zwischen 580 HV und 800 HV und die weniger harten Stahlschichten (12, 13) eine Härte von maximal 560 HV aufweisen.

8. Messer (1) nach mindestens einem der vorhergehenden Ansprüche, **dadurch gekennzeichnet, dass** die härteren Stahlschichten (11, 14) einen Kohlenstoffgehalt von etwa zwischen 0,30 % bis 1,20 % und die weniger harten Stahlschichten (12, 13) einen Kohlenstoffgehalt von maximal 0,18 % aufweisen.

9. Messer (1) nach mindestens einem der vorhergehenden Ansprüche, **dadurch gekennzeichnet, dass** die härteren Stahlschichten (11, 14) weiterhin die folgenden Bestandteile aufweisen: Si 0,15 % - 0,40 %, Mn 0,25 % - 0,75 %, P max. 0,02 %, S max. 0,008 %, Alg max. 0,02 %, Cr 0,19 % - 1,60 %, N max. 0,01 %, Cu max. 0,15 %, Mo max. 0,05 %, Ni max. 0,15 %, Nb max. 0,05 %, Ti max. 0,008 %, V max. 0,05 %, B max. 0,0005 %, As max. 0,01 %, Sn max. 0,03 %, H max. 3,5 %, Co max. 0,01 %, Ca max. 0,005 %, O max. 0,002 %.

10. Messer (1) nach mindestens einem der vorhergehenden Ansprüche, **dadurch gekennzeichnet, dass** die weniger harten Stahlschichten (12, 13) weiterhin die folgenden Bestandteile aufweisen: Si max. 0,06 %, Mn max. 0,6 %, P max. 0,02 %, S max. 0,015 %, Alg max. 0,06%, Cr max. 0,12 %, N max. 0,009 %, Cu max. 0,12 %, Mo max. 0,05 %, Ni max. 0,12 %, Nb max. 0,005 %, Ti max. 0,005 %, V max. 0,01 %, B max. 0,006 %, As max. 0,01 %, Sn max. 0,04 %, Co max. 0,01 %, Ca max. 0,005 %.

11. Messer (1) nach mindestens einem der vorhergehenden Ansprüche, **dadurch gekennzeichnet, dass** die Schneide (5) dachförmig ausgebildet ist und der Grundkörper (2) eine besonders harte zentrale Stahlschicht (14) aufweist.

12. Messer (1) nach Anspruch 11, **dadurch gekennzeichnet, dass** die zentrale Stahlschicht (14) eine Härte von etwa zwischen 620 HV und 800 HV aufweist.

13. Messer (1) nach Anspruch 11 oder 12, **dadurch gekennzeichnet, dass** die zentrale Stahlschicht (14) die folgenden Bestandteile aufweist: C 0,96 % - 1,04 %, Si 0,15 % - 0,35 %, Mn 0,25 % - 0,4 %, P max. 0,02 %, S max. 0,003 %, Alg max. 0,02 %, Cr, 1,45 % - 1,6 %, N max. 0,01 %, Cu max. 0,15 %, Mo max. 0,05 %, Ni max. 0,15 %, Nb max. 0,05 %, Ti max. 0,003 %, V max. 0,05 %, Sn max. 0,01 %, O max. 0,002 %.

14. Messer (1) nach mindestens einem der Ansprüche 11 bis 13, **dadurch gekennzeichnet, dass** die zentrale Stahlschicht (14) eine Dicke besitzt, die etwa zwischen 15 % und 35 % der Dicke des Grundkörpers (2) beträgt.

15. Messer (1) nach mindestens einem der vorhergehenden Ansprüche, **dadurch gekennzeichnet, dass** der Grundkörper (2) zumindest im Bereich seiner Schneide (5) vergütet ist.

## Claims

1. An agricultural or forestry blade (1), especially a cutting blade for rotary mowers, a rotary blade, a silage blade, a straw chopper blade or an underfloor chopper blade, comprising:
a base body (2) including two main surfaces (3) and a plurality of side surfaces (4), the base body (2) in the region of a side surface (4) including a cutting portion (5), **characterised in that**
the base body (2) includes a plurality of steel layers (10, 11, 12, 13, 14) of different hardness, the steel layers (10, 11, 12, 13, 14) extending parallel to the main surfaces (3),
one of the harder steel layers (11, 14) having a thickness being at least approximately 30 % greater than the thickness of one of the less hard steel layers (12, 13).

2. The blade (1) of claim 1, **characterised in that** the harder and the less hard steel layers (11, 12, 13, 14) are alternatingly arranged one above the other.

3. The blade (1) of claim 1 or 2, **characterised in that** the two main surfaces (3) are each formed by a harder steel layer (11, 14).

4. The blade (1) of at least one of the preceding claims, **characterised in that** the base body (2) includes at least six steel layers (10, 11, 12, 13, 14).

5. The blade (1) of at least one of the preceding claims, **characterised in that** the steel layers (10, 11, 12, 13, 14) have a thickness of between approximately 0,08 mm and 1.0 mm.

6. The blade (1) of at least one of the preceding claims, **characterised in that** the base body (2) includes steel layers (10, 11, 12, 13, 14) with more than two different hardnesses.

7. The blade (1) of at least one of the preceding claims, **characterised in that** the harder steel layers (11, 14) have a hardness of approximately between 580 HV and 800 HV and the less hard steel layers (12, 13) have a hardness of maximally 560 HV.

8. The blade (1) of at least one of the preceding claims, **characterised in that** the harder steel layers (11, 14) have a carbon content of approximately between 0,30 % to 1.20 % and the less hard steel layers (12, 13) have a carbon content of maximally 0.18 %.

9. The blade (1) of at least one of the preceding claims, **characterised in that** the harder steel layers (11, 14) furthermore include the following components: Si 0.15 % - 0.40 %, Mn 0.25 % - 0.75 %, P max. 0.02 %, S max. 0.008 %, Alg max. 0.02 %, Cr 0.19 % - 1.60 %, N max. 0.01 %, Cu max. 0.15 %, Mo max. 0.05 %, Ni max. 0.15 %, Nb max. 0.05 %, Ti max. 0.008 %, V max. 0.05 %, B max. 0.0005 %, As max. 0.01 %, Sn max. 0.03 %, H max. 3.5 %, Co max. 0.01 %, Ca max. 0.005 %, O max. 0.002 %.

10. The blade (1) of at least one of the preceding claims, **characterised in that** the less hard steel layers (12, 13) furthermore include the following components: Si max. 0.06 %, Mn max. 0.6 %, P max. 0.02 %, S max. 0.015 %, Alg max. 0.06%, Cr max. 0.12 %, N max. 0.009 %, Cu max. 0.12 %, Mo max. 0.05 %, Ni max. 0.12 %, Nb max. 0.005 %, Ti max. 0.005 %, V max. 0.01 %, B max. 0.006 %, As max. 0.01 %, Sn max. 0.04 %, Co max. 0.01 %, Ca max. 0.005 %.

11. The blade (1) of at least one of the preceding claims, **characterised in that** the cutting portion (5) is designed to be roof-like and the base body (2) has an especially hard centre steel layer (14).

12. The blade (1) of claim 11, **characterised in that** the centre steel layer (14) has a hardness of approximately between 620 HV and 800 HV.

13. The blade (1) of claim 11 or 12, **characterised in that** the centre steel layer (14) includes the following components: C 0.96 % - 1.04 %, Si 0.15 % - 0.35 %, Mn 0.25 % - 0.4 %, P max. 0.02 %, S max. 0.003 %, Alg max. 0.02 %, Cr, 1.45 % - 1.6 %, N max. 0.01 %, Cu max. 0.15 %, Mo max. 0.05 %, Ni max. 0.15 %, Nb max. 0.05 %, Ti max. 0.003 %, V max. 0.05 %, Sn max. 0.01 %, O max. 0.002 %.

14. The blade (1) of at least one of claims 11 to 13, **characterised in that** the centre steel layer (14) has a thickness being approximately between 15 % and 35 % of the thickness of the base body (2).

15. The blade (1) of at least one of the preceding claims, **characterised in that** the base body (2) at least in the region of its cutting portion (5) is hardened and tempered.

## Revendications

1. Couteau (1) agricole ou forestier, en particulier lame pour faucheuse rotative, couteau de rotor, couteau de mélangeuse de fourrage, couteau de hacheuse de paille ou couteau de hacheuse en sous-sol, avec:
un corps de base (2) avec deux surfaces principales (3) et plusieurs surfaces latérales (4), le corps de base (2) présentant un tranchant (5) dans la zone d'une surface latérale (4), **caractérisé en ce que**
le corps de base (2) présente une pluralité de couches d'acier (10, 11, 12, 13, 14) de différentes duretés s'étendant parallèlement aux surfaces principales (3),
une des couches d'acier plus dures (11, 14) présentant une épaisseur qui est au moins environ 30 % plus grande que l'épaisseur d'une des couches d'acier moins dures (12, 13).

2. Couteau (1) selon la revendication 1, **caractérisé en ce que** les couches d'acier plus dures et les couches d'acier moins dures (11, 12, 13, 14) sont disposées de façon alternée les unes sur les autres.

3. Couteau (1) selon la revendication 1 ou 2, **caractérisé en ce que** les deux surfaces principales (3) sont formées respectivement d'une couche d'acier plus dure (11, 14).

4. Couteau (1) selon au moins l'une des revendications précédentes, **caractérisé en ce que** le corps de base (2) présente au moins six couches d'acier (10, 11, 12, 13, 14).

5. Couteau (1) selon au moins l'une des revendications précédentes, **caractérisé en ce que** les couches d'acier (10, 11, 12, 13, 14) présentent une épaisseur comprise entre environ 0,08 mm et 1,0 mm.

6. Couteau (1) selon au moins l'une des revendications précédentes, **caractérisé en ce que** le corps de base (2) présente des couches d'acier (10, 11, 12, 13, 14) avec plus de deux duretés différentes.

7. Couteau (1) selon au moins l'une des revendications précédentes, **caractérisé en ce que** les couches d'acier plus dures (11, 14) présentent une dureté comprise entre environ 580 HV et 800 HV, et les couches d'acier moins dures (12, 13) présentent une dureté de 560 HV maximum.

8. Couteau (1) selon au moins l'une des revendications précédentes, **caractérisé en ce que** les couches d'acier plus dures (11, 14) présentent une teneur en carbone d'environ 0,30 % à 1,20 %, et les couches d'acier moins dures (12, 13) présentent une teneur en carbone de 0,18 % maximum.

9. Couteau (1) selon au moins l'une des revendications précédentes, **caractérisé en ce que** les couches d'acier plus dures (11, 14) présentent en outre les composants suivants: Si 0,15 % - 0,40 %, Mn 0,25 % - 0,75 %, P max. 0,02 %, S max. 0,008 %, Alg max. 0,02 %, Cr 0,19 % - 1,60 %, N max. 0,01 %, Cu max. 0,15 %, Mo max. 0,05 %, Ni max. 0,15 %, Nb max. 0,05 %, Ti max. 0,008 %, V max. 0,05 %, B max. 0,0005 %, As max. 0,01 %, Sn max. 0,03 %, H max. 3,5 %, Co max. 0,01 %, Ca max. 0,005 %, O max. 0,002.

10. Couteau (1) selon au moins l'une des revendications précédentes, **caractérisé en ce que** les couches d'acier moins dures (12, 13) présentent en outre les composants suivants: Si max. 0,06 %, Mn max.0,6 %, P max. 0,02 %, S max. 0,015 %, Alg max. 0,06 %, Cr max. 0,12 %, N max. 0,009 %, Cu max. 0,12 %, Mo max. 0,05 %, Ni max. 0,12 %, Nb max. 0,005 %, Ti max. 0,005 %, V max. 0,01 %, B max. 0,006 %, As max. 0,01 %, Sn max. 0,04 %, Co max. 0,01 %, Ca max. 0,005 %.

11. Couteau (1) selon au moins l'une des revendications précédentes, **caractérisé en ce que** la lame (5) est constituée en forme de toit et le corps de base (2) présente une couche d'acier centrale (14) particulièrement dure.

12. Couteau (1) selon la revendication 11, **caractérisé en ce que** la couche d'acier centrale (14) présente une dureté comprise entre environ 620 HV et 800 HV.

13. Couteau (1) selon la revendication 11 ou 12, **caractérisé en ce que** la couche d'acier centrale (14) présente les composants suivants: C 0,96 % - 1,04 %, Si 0,15 % - 0,35 %, Mn 0,25 % - 0,4 %, P max. 0,02 %, S max. 0,003 %, Alg max. 0,02 %, Cr 1,45 % - 1,6 %, N max. 0,01 %, Cu max. 0,15 %, Mo max. 0,05 %, Ni max. 0,15 %, Nb max. 0,05 %, Ti max. 0,003 %, V max. 0,05 %, Sn max. 0,01 %, O max. 0,002 %.

14. Couteau (1) selon au moins l'une des revendications 11 à 13, **caractérisé en ce que** la couche d'acier centrale (14) possède une épaisseur qui est comprise entre environ 15 % et 35% de l'épaisseur du corps de base (2).

15. Couteau (1) selon au moins l'une des revendications précédentes, **caractérisé en ce que** le corps de base (2) est soumis à un traitement par trempe et revenu au moins dans la zone de son tranchant (5).
